(19) Europäisches Patentamt / European Patent Office / Office européen des brevets

(11) **EP 2 264 132 B1**

(12) **EUROPEAN PATENT SPECIFICATION**

(45) Date of publication and mention
of the grant of the patent:
**10.09.2014 Bulletin 2014/37**

(21) Application number: **09713396.1**

(22) Date of filing: **23.02.2009**

(51) Int Cl.:
***C10M 169/02*** *(2006.01)*      ***F16C 33/66*** *(2006.01)*
*C10N 30/08* *(2006.01)*      *C10N 40/02* *(2006.01)*
*C10N 50/10* *(2006.01)*

(86) International application number:
**PCT/JP2009/053168**

(87) International publication number:
**WO 2009/104790 (27.08.2009 Gazette 2009/35)**

(54) **GREASE COMPOSITION AND BEARINGS**

SCHMIERFETTZUSAMMENSETZUNG UND LAGER

COMPOSITION DE GRAISSE ET ROULEMENTS

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **22.02.2008 JP 2008041764**

(43) Date of publication of application:
**22.12.2010 Bulletin 2010/51**

(73) Proprietor: **Kyodo Yushi Co., Ltd.
Kanagawa 251-8588 (JP)**

(72) Inventors:
 • **AIDA, Ryo
 Fujisawa-shi
 Kanagawa 251-8588 (JP)**
 • **IMAI, Junichi
 Fujisawa-shi
 Kanagawa 251-8588 (JP)**

(74) Representative: **Vossius & Partner
Siebertstrasse 4
81675 München (DE)**

(56) References cited:
**EP-A1- 0 414 191       JP-A- 3 079 698
JP-A- 5 140 576       JP-A- 9 059 661
JP-A- 49 071 357       JP-A- 2004 224 823
JP-A- 2004 250 481**

**Description**

**[Technical Field]**

The present invention relates to a grease composition and a bearing, and more particularly to a grease composition advantageously used for rolling element bearings of the automotive electrical equipment and/or automotive auxiliaries, and the rolling element bearings of the automotive electrical equipment and/or automotive auxiliaries containing the above-mentioned grease composition.

**[Background Art]**

To satisfy the demands on cars for a smaller size and lighter weight on one hand and a larger living space on the other hand, the reduction of space for the engine room has been required, which leads to the reduction in size and weight of the automotive electrical equipment and the auxiliary devices for the engine room. Also, in response to the demand for quietness, the engine room is closely sealed, so that the automotive electrical equipment and the auxiliary devices are required to be resistant to high temperatures.

In line with the higher temperatures of the operating environment, a sealing material mainly containing polyacrylic rubber (e.g., ACM) with improved heat resistance has been used dominantly for sealing the bearings instead of the conventional resin and rubber materials. Under such circumstances, the grease is required to have a long lubricating life for the bearing under high temperatures and excellent compatibility with the sealing material such as the ACM material.

Conventionally, lithium soap greases, diurea greases and the like using inexpensive mineral oils, synthetic hydrocarbon oils and ether-based synthetic oils as the base oil are employed for rolling element bearings. Among the diurea greases, aromatic urea is particularly used on the grounds of its durability under high temperatures.

However, those greases cannot ensure a long bearing life at elevated temperatures because the heat resistance of the base oils and thickeners may be insufficient or the filling performance of the grease into the part to be lubricated may be unsatisfactory.

As an example of improvement of the filling performance by using a particular thickener, Japanese Patent No. 2979274 describes a grease composition comprising a base oil where an ether-based synthetic oil is contained in an amount of more than 50 mass%, and a diurea compound represented by the following formula as the thickener:

$$R^1\text{-NHCONH-}R^2\text{-NHCONH-}R^3$$

wherein $R^1$ is an aromatic hydrocarbon group having 6 to 15 carbon atoms; and $R^2$ and $R^3$, which may be the same or different, represent a cyclohexyl group, cyclohexyl-derived group having 7 to 12 carbon atoms, or an alkyl group having 8 to 20 carbon atoms, with the ratio of the number of moles of the cyclohexyl group and the cyclohexyl-derived group to the total number of moles of the cyclohexyl group, the cyclohexyl-derived group having 7 to 12 carbon atoms and the alkyl group having 8 to 20 carbon atoms being 50 to 100%.

However, the above-mentioned grease composition shows insufficient compatibility of the base oil with the thickener and the unsatisfactory filling performance, so that the sufficient bearing life cannot be ensured.

EP 0 414 191 (A1) describes a grease composition for a high speed anti-friction bearing comprising, in a synthetic lubricant base oil, (A) 2 to 30 wt.% of a thickening agent consisting of a urea compound, (B) 0.2 to 30 wt.% of sorbitan monooleate, (C) 0.2 to 3.0 wt.% of barium sulfonate, and (D) 0.2 to 3.0 wt.% of barium lanolate, as indispensable components, each weight percentage being based on the total weight of the composition.

JP-A-0959661 describes a grease composition which uses a synthetic oil having a kinematic viscosity of 45-450mm$^2$/sec at 40°C as the base oil and contains 10-24wt.% of a diurea compound represented by the formula $R^2$-NH(CO)NH-$R^1$-NH(CO)NH-$R^3$, wherein $R^1$ is a 6-15C aromatic hydrocarbon group; and $R^2$ and $R^3$ are each independently a 6-20C aliphatic hydrocarbon group, a 6-12C cyclohexyl derived group, or a 6-12C aromatic hydrocarbon group provided the proportion of the cyclohexyl derived group to the total amount of $R^1$ and $R^3$ is 20-90mol%, as a thickener.

**[Summary of Invention]**

**[Technical Problem]**

An object of the invention is to provide a grease composition which is capable of extending the bearing life even at elevated temperatures and has less adverse effect on acrylic rubber when compared with the conventional greases.

Another object of the invention is to provide a bearing in which the above-mentioned grease composition is packed.

**[Solution to Problem]**

After the inventors of the invention have intensively studied to achieve the above-mentioned objects, it was found that the above-mentioned problems can be solved by a selection of a base oil and a thickener. The invention has been thus accomplished based on the findings. The invention provides a grease composition and a bearing in which the grease composition is packed, as shown below.

(1) A grease composition comprising a thickener and a base oil, wherein the base oil comprises a synthetic hydrocarbon oil in an amount of 20 mass% or more of the total mass of the base oil and an ester-based oil in an amount of 20 mass% or less of the total mass of the base oil, wherein the base oil further comprises an ether-based oil, and wherein the thickener comprises a diurea compound represented by the following formula (I):

$$R^1\text{-NHCONH-}R^2\text{-NHCONH-}R^3 \qquad (I)$$

wherein $R^2$ is a divalent aromatic hydrocarbon group having 6 to 15 carbon atoms; and $R^1$ and $R^3$, which may be the same or different, represent a cyclohexyl group or a straight-chain or branched alkyl group having 8 to 18 carbon atoms, with the ratio of the number of moles of cyclohexyl group to the total number of moles of $R^1$ and $R^3$ being 60 to 95%.

(2) The grease composition described in the above-mentioned (1), wherein the ratio of the number of moles of cyclohexyl group to the total number of moles of $R^1$ and $R^3$ is 70 to 90%.

(3) The grease composition described in the above-mentioned (1) or (2), which is used for a bearing.

(4) The grease composition described in the above-mentioned (3), wherein the bearing is a rolling element bearing for the automotive electrical equipment and/or automotive auxiliaries.

(5) The grease composition described in the above-mentioned (4), wherein the bearing for the automotive electrical equipment and/or automotive auxiliaries is a bearing for outer ring rotation.

(6) A bearing comprising the grease composition described in any one of the above-mentioned (1) to (5) which is packed in the bearing.

**[Advantageous Effects of Invention]**

The grease composition of the invention can be reliably charged into a part to be lubricated because a particular alicyclic-aliphatic diurea compound is contained as the thickener in the grease composition. In addition, the heat resistance can be ensured and the grease composition has little adverse effect on acrylic rubber because the base oil comprises a synthetic hydrocarbon oil in an amount of 20 mass% or more of the total mass of the base oil and an ester-based oil in an amount of 20 mass% or less of the total mass of the base oil. Consequently, when the grease composition of the invention is used for the bearings, it is possible to extend the bearing life even at elevated temperatures. In addition, because of excellent compatibility with the acrylic rubber, the grease composition of the invention is especially suitable for the bearings of the automotive electrical equipment and/or the automotive auxiliaries, such as an alternator, electromagnetic clutch for the car air conditioner, center pulley, idler pulley, tension pulley and the like.

**[Description of Embodiments]**

To obtain a long lubricating life by use of grease, a proper fluidity should be imparted to the grease so that the grease may flow into a part to be lubricated. However, excessive fluidity leads to leakage of the grease. The fluidity of the grease is adjusted by the thickener. In the urea-based thickener represented by formula (I), the higher the ratio of the alicyclic moieties in the groups represented by $R^1$ and $R^3$, the lower the fluidity. When the ratio of the aliphatic moieties becomes higher, the obtained fluidity becomes higher.
In the invention, by adjusting the ratio of the number of moles of cyclohexyl group to the total number of moles of $R^1$ and $R^3$ to 60 to 95%, preferably 70 to 90%, the grease composition can ensure a proper fluidity as the grease composition for the bearings operating at high speeds and elevated temperatures, such as rolling element bearings of the automotive electrical equipment and/or automotive auxiliaries.
Further, the number of carbon atoms in the straight-chain or branched alkyl group which is used in combination with the above-mentioned cyclohexyl group is also one of the causes to determine the fluidity of grease. The number of carbon atoms is 8 to 18, preferably 16 to 18. Two or more groups of which the number of carbon atoms is different may be used as a mixture.

The base oil of the grease composition according to the invention comprises a synthetic hydrocarbon oil in an amount of 20 mass% or more, preferably 40 mass% or more, based on the total mass of the base oil. Other than the synthetic hydrocarbon oil, any base oil components such as mineral oils and the like are usable. For example, ester-based synthetic oils such as diesters and polyol esters, ether-based synthetic oils such as alkyldiphenyl ethers and polypropylene glycols, silicone synthetic oils, fluorine-containing synthetic oils can be used. However, the addition of ester-based synthetic oil causes the acrylic rubber to swell therein and deteriorate although the ester-based synthetic oil can increase the fluidity of grease and produce the effect of extending the lubrication life of the bearing. In light of this, the ester-based synthetic oil may not be used, or reduced to 20 mass% or less based on the total mass of the base oil if used.

When necessary, the grease composition of the invention may further comprise additives generally used in the conventional grease compositions. Examples of the additives include an antioxidant such as amine-based and phenol-based antioxidants; an inorganic passivator such as sodium nitrite or the like; a rust preventive such as sulfonate-based, succinic acid-based, amine-based, and carboxylate-based rust preventives; a metallic corrosion inhibitor such as benzotriazole or the like, an oiliness improver such as fatty acids, fatty acid esters, phosphates and the like; an antiwear agent or extreme-pressure agent such as phosphorus-containing antiwear agent, sulfur-containing antiwear agent, organic metal-containing antiwear agent or the like; and a solid lubricant such as oxidized metal salts, molybdenum disulfide or the like. Also, a variety of additives for preventing flaking due to hydrogen embrittlement, for example, a passivator (as described in Japanese Patent No. 2878749), and organic sulfonates and thiocarbamates and the like (as described in Japanese Patent Unexamined Publication (JP Kokai) 2007-262300) can be added.

**[Examples]**

**Examples 1 to 6 and Comparative Examples 1 to 6**

Preparation of Sample Grease

An aromatic diisocyanate (diphenylmethane diisocyanate) was reacted with a predetermined amount of amine (cyclohexylamine, stearyl amine, p-toluidine) in a base oil and the reaction mixture was diluted with the base oil to such a degree that the worked penetration (JIS K2220) of the resultant product reached 280, thereby preparing a base grease. By adding the additives shown below to the base grease, the grease compositions were obtained in Examples 1 to 6 and Comparative Examples I to 6.

\<Thickener\>

$$\text{Content (mol\%) of cyclohexyl (CH) group} = [(\text{number of moles of cyclohexyl group}) / ((\text{number of moles of cyclohexyl group}) + (\text{number of moles of alkyl group}))] \times 100$$

Thickener A: alicyclic-aliphatic diurea
Thickener B: alicyclic diurea
Thickener C: aromatic diurea (p-toluidine was used.)

\<Base oil (kinematic viscosity at 40°C)\>

Synthetic hydrocarbon oil (68 mm$^2$/s): poly($\alpha$-olefin)
Phenyl ether oil (97 mm$^2$/s): alkyldiphenyl ether oil
Ester oil (76.9 mm$^2$/s): dipentaerythritol ester oil
Additive (amine-based antioxidant): alkyldiphenylamine

\<Evaluation methods for grease compositions\>

The grease compositions thus prepared were evaluated in accordance with the test methods shown below.

The results are given in Tables 1 and 2.

(Test for life of lubricating greases in bearings: in accordance with ASTM D3336)

This test was conducted by rotating the inner ring of the bearing to evaluate the life of lubricating greases in the bearing at elevated temperatures. The bearing was operated under the following conditions. When the overcurrent of the motor or the increase of temperature from the predetermined temperature by 15°C was observed, the life of lubricating grease was considered to expire.

Bearing type: 6204 metal sealed bearing
Testing temperature: 180°C
The number of rotations: 10,000 rpm
Test load: axial load 66.7 N
radial load 66.7 N

(Acrylic rubber immersion test: JIS K-6258)

The volume of a sample rubber was measured prior to the test. Then, the sample rubber was immersed in a grease contained in a container and allowed to stand in a thermostatic chamber of a predetermined temperature. After a lapse of a predetermined period of time, the volume of the sample rubber was measured again. Then, the volume change was obtained by calculation.

Testing temperature: 180°C
Testing time: 72 hours
Volume change: the volume change of 20% or less was regarded as acceptable.

(Overall Evaluations)

In the test for life of lubricating greases in bearings, the life of 600 hours or more was regarded as acceptable.
In the acrylic rubber immersion test, the volume change of 20% or less was regarded as acceptable.
Worked penetration: All greases were controlled to have a worked penetration of 280.

[Table 1]

| Components | | Ex. 1 | Ex. 2 | Ex. 3 | Ex. 4 | Ex. 5 | Ex. 6[1] |
|---|---|---|---|---|---|---|---|
| Thickener | | A | A | A | A | A | A |
| CH ratio in thickener (mol%) | | 85 | 70 | 85 | 85 | 90 | 85 |
| Proportions of oils in base oil | Synthetic hydrocarbon oil | 60 | 60 | 20 | 60 | 40 | 80 |
| | Phenyl ether oil | 40 | 40 | 80 | 20 | 40 | |
| | Ester oil | | | | 20 | 20 | 20 |
| Life of lubricating grease in bearing (hr.) | | 600< | 600< | 600< | 600< | 600< | 600< |
| Acrylic rubber immersion test (%) | | 20> | 20> | 20> | 20> | 20> | 20> |
| Overall evaluation | | o | o | o | o | o | o |
| 1) Not within the claims | | | | | | | |

[Table 2]

| Components | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Thickener | A | B | C | A | A | A |
| CH ratio in thickener (mol%) | 40 | 100 | 0 | 85 | 85 | 20 |

(continued)

| Components | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| Proportions of oils in base oil | Synthetic hydrocarbon oil | 60 | 60 | 60 | 60 | | 50 |
| | Phenyl ether oil | 40 | 40 | 40 | | 40 | |
| | Ester oil | | | | 40 | 60 | 50 |
| Life of lubricating grease in bearing (hr.) | | 495 | 317 | 453 | 600< | 600< | 289 |
| Acrylic rubber immersion test (%) | | 20> | 20> | 20> | 20< | 20< | 20< |
| Overall evaluation | | x | x | x | x | x | x |

Results:

The grease compositions of Examples 1 to 6 where the base oil contains a synthetic hydrocarbon oil in an amount of 20 mass% or more with respect to the total mass of the base oil and an ester oil in an amount of 20 mass% or less with respect to the total mass of the base oil, and the ratio of the cyclohexyl group in the thickener is within a range from 60 to 95% can exhibit a long lubricating life in the bearing and those grease compositions have excellent compatibility with the acrylic rubber.

In contrast to this, the grease compositions of Comparative Examples 1 to 3 and 6 where the ratio of the cyclohexyl group in the thickener is not within a range from 60 to 95% each exhibits a lubricating life in the bearing of less than 600 hours. In the grease compositions of Comparative Examples 4 to 6 where the base oil contains an ester oil in an amount of 20 mass% or more, the resistance of acrylic rubber is found to be low.

**Claims**

1. A grease composition comprising a thickener and a base oil, wherein the base oil comprises a synthetic hydrocarbon oil in an amount of 20 mass% or more of the total mass of the base oil and an ester-based oil in an amount of 20 mass% or less of the total mass of the base oil, wherein the base oil further comprises an ether-based oil, and wherein the thickener comprises a diurea compound represented by formula (I):

$$R^1\text{-NHCONH-}R^2\text{-NHCONH-}R^3 \qquad \text{(I)}$$

   wherein $R^2$ is a divalent aromatic hydrocarbon group having 6 to 15 carbon atoms; and
   $R^1$ and $R^3$, which may be the same or different, represent a cyclohexyl group or a straight-chain or branched alkyl group having 8 to 18 carbon atoms,

   with the ratio of the number of moles of cyclohexyl group to the total number of moles of $R^1$ and $R^3$ being 60 to 95%.

2. The grease composition of claim 1, wherein the ratio of the number of moles of cyclohexyl group to the total number of moles of $R^1$ and $R^3$ is 70 to 90%.

3. Use of a grease composition of claim 1 or 2 for a bearing.

4. The use of claim 3, wherein the bearing is a rolling element bearing for automotive electrical equipment and/or automotive auxiliaries.

5. The use of claim 4, wherein the bearing for the automotive electrical equipment and/or automotive auxiliaries is a bearing for outer ring rotation.

6. A bearing comprising the grease composition of claim 1 or 2 therein.

**Patentansprüche**

1. Eine Schmiermittelzusammensetzung, umfassend ein Verdickungsmittel und ein Basisöl, wobei das Basisöl ein synthetisches Kohlenwasserstofföl in einer Menge von 20 Massen-% oder mehr der Gesamtmasse des Basisöls und ein Öl auf Esterbasis in einer Menge von 20 Massen-% oder weniger der Gesamtmasse des Basisöls umfasst, wobei das Basisöl weiterhin ein Öl auf Etherbasis umfasst, und wobei das Verdickungsmittel eine durch die Formel (I) dargestellte Diharnstoffverbindung umfasst:

$$R^1\text{-NHCONH-}R^2\text{-NHCONH-}R^3 \qquad (I)$$

wobei $R^2$ ein divalenter aromatischer Kohlenwasserstoffrest mit 6 bis 15 Kohlenstoffatomen ist; und $R^1$ und $R^3$, welche gleich oder verschieden sein können, einen Cyclohexylrest oder einen geradkettigen oder verzweigten Alkylrest mit 8 bis 18 Kohlenstoffatomen darstellen,
wobei das Verhältnis der Molzahl des Cyclohexylrests zur gesamten Molzahl von $R^1$ und $R^3$ 60 bis 95 % beträgt.

2. Die Schmiermittelzusammensetzung gemäß Anspruch 1, wobei das Verhältnis der Molzahl des Cyclohexylrests zur gesamten Molzahl von $R^1$ und $R^3$ 70 bis 90 % beträgt.

3. Verwendung einer Schmiermittelzusammensetzung gemäß Anspruch 1 oder 2 für ein Lager.

4. Die Verwendung gemäß Anspruch 3, wobei das Lager ein Wälzlager für elektrische Fahrzeug-Ausrüstung und/oder Fahrzeug-Hilfseinrichtungen ist.

5. Die Verwendung gemäß Anspruch 4, wobei das Lager für die elektrische Fahrzeug-Ausrüstung und/oder Fahrzeug-Hilfseinrichtungen ein Lager für Außenringrotation ist.

6. Ein Lager, welches darin die Schmiermittelzusammensetzung gemäß Anspruch 1 oder 2 umfasst.

**Revendications**

1. Composition de graisse comprenant un épaississant et une huile de base, dans laquelle l'huile de base comprend une huile hydrocarbonée synthétique dans une quantité de 20 % en masse ou supérieure de la masse totale de l'huile de base et une huile à base d'ester dans une quantité de 20 % en masse ou inférieure de la masse totale de l'huile de base, dans laquelle l'huile de base comprend de plus une huile à base d'éther, et dans laquelle l'épaississant comprend un composé de diurée représenté par la formule (I) :

$$R^1\text{-NHCONH-}R^2\text{-NHCONH-}R^3 \qquad (I)$$

dans laquelle $R^2$ est un groupe hydrocarboné aromatique divalent ayant de 6 à 15 atomes de carbone ; et $R^1$ et $R^3$, lesquels peuvent être identiques ou différents, représentent un groupe cyclohexyle ou un groupe alkyle linéaire ou ramifié ayant de 8 à 18 atomes de carbone,

avec le rapport du nombre de moles de groupe cyclohexyle au nombre total de moles de $R^1$ et $R^3$ étant de 60 à 95 %.

2. Composition de graisse selon la revendication 1, dans laquelle le rapport du nombre de moles de groupe cyclohexyle au nombre total de moles de $R^1$ et $R^3$ est de 70 à 90 %.

3. Utilisation d'une composition de graisse selon la revendication 1 ou 2 pour un palier.

4. Utilisation selon la revendication 3, dans laquelle le palier est un palier à élément de roulement pour un équipement électrique de véhicule automobile et/ou des accessoires de véhicule automobile.

5. Utilisation selon la revendication 4, dans lequel le palier pour l'équipement électrique de véhicule automobile et/ou des accessoires de véhicule automobile est un palier pour une rotation à bague externe.

6. Palier comprenant la composition de graisse selon la revendication 1 ou 2 dans celui-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2979274 B
- EP 0414191 A1
- JP 0959661 A
- JP 2878749 B
- JP 2007262300 A